Europäisches Patentamt

European Patent Office

Office européen des brevets

(11) Publication number: **0 390 611**
**A2**

## (12) EUROPEAN PATENT APPLICATION

(21) Application number: **90303486.6**

(22) Date of filing: **30.03.90**

(51) Int. Cl.⁵: **G06F 15/02**

(30) Priority: **30.03.89 JP 79511/89**

(43) Date of publication of application:
**03.10.90 Bulletin 90/40**

(84) Designated Contracting States:
**DE FR GB IT**

(71) Applicant: **HIUKA SANGYO KABUSHIKI KAISHA**
**2-6, Doujimahama 1-chome, Kita-ku**
**Osaka, Osaka-fu(JP)**

Applicant: **KABUSHIKI KAISHA SYSTEM**

**GIJYUTU KENKYUUSHO**
**8-11, Higashi-Nihonbashi 2-chome, Chuo-ku**
**Tokyo(JP)**

(72) Inventor: **Tsuchiya, Haruki**
**20-6, Konakadai 3-chome**
**Chiba-shi, Chiba-ken(JP)**

(74) Representative: **Brunner, Michael John et al**
**GILL JENNINGS & EVERY 53-64 Chancery Lane**
**London WC2A 1HN(GB)**

(54) **Electronic book.**

(57) Disclosed is an electronic book (1) which permits retrieval and visual presentation of information from memory means such as floppy disks or laser cards in the same fashion as books, magazines or newspapers. Renewal of information in the paperless book may be effected by changing, for instance floppy disks or by receiving information on the air or over the telephone and putting the so-received information in the internal memory of the paperless book. The paperless book permits an individual reader to read sequential visual presentations of information at a speed at which he can read books, magazines or newspapers.

FIG. 1

## ELECTRONIC BOOK

The present invention relates to an apparatus for retrieving and displaying the contents of books, newspapers, magazines, drawings or photographs which are stored in electronic, optical or magnetic recording media.

Characters, photographs and drawings are printed on paper to form books, newspapers and magazines. Printing on paper permits visual display of pieces of information, and the art of printing permits mass reproduction of same contents within a relatively short time. Therefore, printing is an excellent mass communication means.

However, the use of paper costs much in transportation, warehousing and disposal of used paper because of its bulk. In an attempt to save paper material, used paper is reclaimed, but reclaimed paper is often of such a poor quality that printing is not possible. At present forest resources are inevitably wasted to provide paper which can be used for printing.

In the hope of saving forest resources the use of electronic, optical or magnetic recording media as a substitute for paper has been considered. Some examples of such recording media are integrated circuit boards (electronic recording medium), compact disks (optical recording medium), floppy disks (magnetic recording medium), magnetic cards (magnetic recording medium), digital audio tape (magnetic recording medium), and laser cards (optical recording medium). These recording mediums require reading means as shown in following table:

| recording medium | reading means | capacity (equivalent no. of pages of the book) |
|---|---|---|
| IC card | exclusive reading means required as is the case with credit cards | 8 Kbytes (4 pages) |
| compact disk | CD-ROM drive | 12cm CD-ROM 504 Mbytes (270,000 pages) |
| floppy disk | floppy disk drive | 1 Mbyte (500 pages) |
| magnetic card | cash dispenser and the like | 84 bytes (0.022 pages) |
| laser card | laser card reader | 2 Mbytes (1000 pages) |
| (Each page of a book is assumed to contain 2000 characters, which correspond to 2000 bytes.) | | |

The manner of reading these recording media is totally different from the manner of reading books, newspapers or magazines.

A personal computer is used to read compact disks or floppy disks. It has a reading apparatus separate from the display of the computer. Its keyboard must be operated to have access to a desired content in such a recording medium for displaying. The whole apparatus is large in size, and associated memory has an increased capacity large enough to permit reference or looking at for information.

IC cards and magnetic cards are of the same size as credit cards. These recording media have a relatively small recording capacity, and are designed for a small scale application. IC cards can be renewed in content, and can be used for same purpose as credit cards. As for magnetic cards, these recording means are used as credit cards or prepaid telephone cards.

Laser cards require a reading apparatus of an increased size, compared with the reading apparatus for magnetic cards.

Electronic, magnetic or optical recording media have a variety of applications, but they cannot be used in the same fashion as paper on which characters are printed to convey pieces of information as in books, newspapers or magazines.

The table shows that floppy disks and laser cards have a recording capacity comparable to books, newspapers or magazines. A compact disk, however, has unnecessarily large or superfluous recording capacity to store the content of ordinary printed matter, excluding encyclopedias. Laser cards are small in size, and have a capacity appropriate for recording information as much as ordinary printed matter, but, disadvantageously, laser cards require a large-scale reading apparatus.

The inventor has proposed an electronic book which can be used in the same fashion as books, newspapers or magazines. This paperless book must meet the following requirements:

1) sentences, drawings or patterns can be displayed in the same fashion as books, newspapers or magazines;

2) small-sized magnetic or optical recording disks or IC cards which have as much content as a book having several hundred pages, can be read in the same fashion as books.

3) it must be portable in size and weight, and able to be carried like a book. A person must be able to read it anywhere.

In an attempt to make the device portable, parts to effect the following functions are eliminated from a personal computer-like object. Stated otherwise, a paperless book can be provided by depriving a personal computer of the following functions:

a) elimination of the need to print displayed contents (no printer required); and

b) elimination of the need to effect complicated reference (no keyboard required for the purpose)

Extra requirements for such paperless books are:

1) underlining function

Selected portions in the displayed information can be underlined as in books, newspapers or magazines.

2) contextual continuing function If a sentence continues from page to page, the preceding part can be shifted to the subsequent part of the sentence on the page now on display.

3) page-turning speed control Subsequent pages are displayed one after another at intervals. This interval can be controlled by pushing a selected key like turning over the pages of a book to meet the speed at which the reader reads the displayed pages.

4) Some readers feel botheration in pushing a selected key to turn over pages. An automatic page-turning function can be selected, and then pages will be displayed one after another at regular intervals.

5) Extra characters other than standard ones are required to be displayed, although rare in occurrence. Storage of all extra characters, however would make the paperless book large beyond a portable size. This rare demand must be satisfied without using an inhibitively large capacity memory.

6) Requirements for composition must be met.

7) When occasions demand, stored pieces of information must be renewed to permit the display of latest information.

According to the first aspect of the present invention an electronic book performs the function of putting a cursor on a selected position in a displayed page, locating the selected position, and underlining the part of the displayed page running from the selected start position to a desired end position. The position of the underline is stored, and the underline can be displayed when desired.

According to the second aspect of the present invention pages are turned over one after another automatically at regular intervals.

According to the third aspect of the present invention external memory means such as a floppy disk has a storage area allotted to store selected extra characters such as Sanskrit characters appearing in the content of the external memory means. Internal memory means or ROM stores standard characters in the form of digital font signals at selected addresses. When addressed, it supplies a particular font signal to permit excitation of selected liquid crystal pixel in the shape of the desired character. Thus, the internal memory functions as a character generator. Likewise, the extra characters which appear in the content of the external memory are stored in the form of digital font signals at selected addresses in the allotted area of the external memory. When the computer meets a character which is not contained in the internal memory, it identifies the character as an extra character, which is stored in the external memory itself. Then, the extra character is read out from the external memory to appear on the liquid crystal display. In short, a part of the external memory is used as an annex to the internal memory when presentation of extra characters is required, thus avoiding the use of inhibitively large capacity internal memory which otherwise would be necessitated to meet the rare demand of presentation of selected extra characters.

According to the fourth aspect of the present invention pieces of information when transmitted on the air or on the telephone are received and stored in memory means while classifying the contents in terms of code numbers. Stored pieces of information can be identified in terms of code numbers for renewal.

The word "memory means" includes internal and external memories. Some examples of external memories are floppy disks, compact disks, IC cards, or other memories composed, for instance of LSI. ROMs and RAMs are used as internal memories.

With the functions as described above, an electronic book according to the present invention can be used in the same fashion as conventional books. The reader can underline selected portions in displayed pages; pages can be automatically changed or turned over; characters of extra shape appear at right selected positions; and in some instances floppy disks, magnetic cards or any other external memories are not required.

The present invention will be better understood from the following description of preferred embodiments which are shown in the accompanying drawings:

Fig.1 is a perspective view of an electronic book according to the present invention in its opening position;

Fig.2 is a perspective view of the electronic book in its closing position;

Fig.3 is a perspective view of another electronic book having a strap;

Fig.4 is an end view of the electronic book, showing some details of the hinges used;

Fig.5 is a block diagram showing connection of components of the electronic book;

Fig.6 shows how stored pieces of information can be renewed; and

Figs.7 to 9 show different modes of renewing pieces of information.

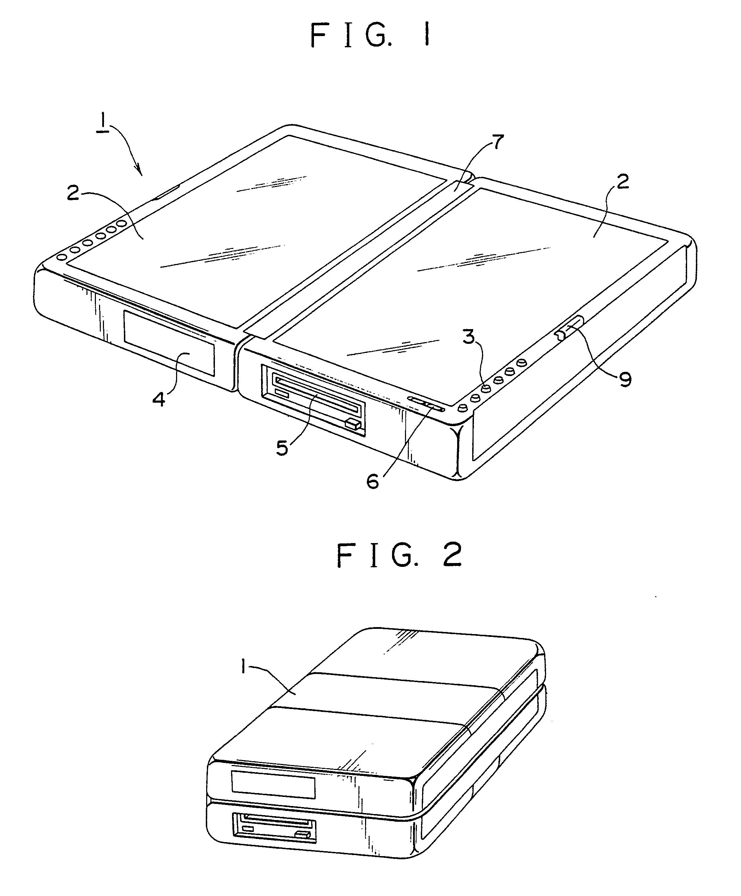

In Fig.1 an electronic book is indicated at 1. It has a display 2. The display 2 may be liquid crystal display, or a plasma display. The electronic book 1 has several keys 3, particularly a key to indicate the display of subsequent page, a key to indicate the return to the preceding page, a key to indicate the display of the contents of the stored information, a key to put a cursor to a selected position on the displayed page, a key to locate the selected position, a key to underline the part of the page between two selected positions, a key to indicate the automatic turning of subsequent pages, a key to adjust intervals at which pages are automatically turned over, and a key to enlarge or reduce the size of characters on display.

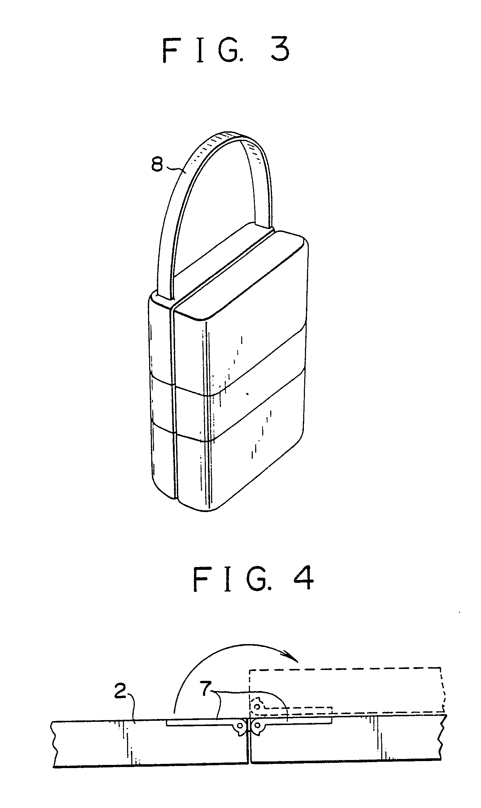

The electronic book has floppy disks which may be stored in square recess 4. A floppy disk is selected and is put in floppy disk drive 5. After inserting the floppy disk in floppy disk drive 5, on/off switch 6 is turned on to start the display. The paperless book can be snapped shut in the position of Fig.2 in which position hook 9 catches the counter edge recess. The paperless book can be opened flat with the aid of hinge 7. Strap 8 can be attached to the book body as shown in Fig.3.

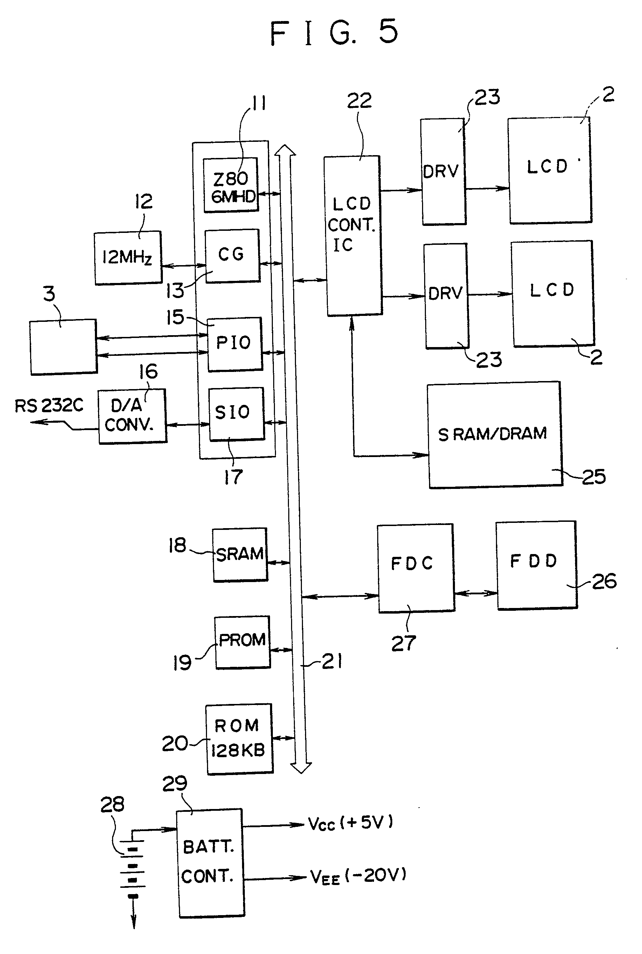

Fig.5 shows the electronic book as comprising a set of keys 3 to perform different functions; input-and-output interface 15 connected to keys 3; central processing unit or microcomputer 11; crystal oscillator 12; clock pulse generator 13 connected to crystal oscillator 12 to determine the cyclic period according to which microcomputer 11 performs its functions or works repeatedly; input-and-output interface 17; converter 16 connected to input-and-output interface 17; liquid crystal driver control 22 having memory 25 associated therewith; two liquid crystal drivers 23 connected to liquid crystal driver control 22; two liquid crystal displays 2 connected to liquid crystal drivers 23; random access memory 18; memory 19 to store programs; read only memory 20 to store standard characters; floppy disk drive control 27; and floppy disk drive 26. These units are connected together by a bus 21. Battery 28 and battery converter 29 function to supply necessary voltages to selected units. A floppy disk may be put in floppy disk drive 26. Floppy disk drive control 27 functions to bring the head of floppy disk drive 26 to a selected position of the floppy disk to read out pieces of information from the selected position of the floppy disk or write pieces of information in the selected position.

ROM 20 stores standard characters in the form of digital font signals at selected addresses. When addressed, it supplies a particular font signal to permit excitation of selected liquid crystal pixel in the shape of desired characters. Thus, memory 22 functions as a character generator.

Random access memory 18 functions to store tentatively a part of the content of the floppy disk. The amount of information to be transferred from the floppy disk to memory 18 depends on the speed at which the reader can read the book because pieces of information must be supplied to displays 2 without making him wait for the appearance of subsequent pages.

Liquid crystal drivers 23 are responsive to font signals for exciting selected dots or pixels in crystal liquid displays 2 in the form of corresponding characters.

Pieces of information as much as two pages long are transferred from memory 18 to memory 25 associated with liquid crystal driver control 22, which retrieves pieces of information from memory 25 without intermission to keep selected pixels excited in liquid crystal displays 2, thus permitting continuous visual presentation of information.

When a selected key is pushed, signals will be directed to computer 11 via input-and output interface 15 and bus 21, thereby performing a selected function such as underlining, displaying of subsequent page or returning to preceding page. In the case of underlining, floppy disk drive control 27 makes floppy disk drive 26 move its head from selected start to end position in the floppy disk, thus recording the underline in the floppy disk.

Communication with a distant data source by telephone can be effected by connecting computer 11 to telephone circuits via bus 21, input-and-output interface 17, converter 16 and modem (not shown).

Here it should be noted that external memory means such as a floppy disk has a storage area allotted to storage of the selected extra characters such as Sanskrit characters appearing in the content of the external means.

As described earlier, internal memory means or ROM stores only standard characters in the form of digital font signals at selected addresses. When addressed, it supplies a particular font signal to permit excitation of selected liquid crystal pixel in the shape of the desired character. Thus, the internal memory functions as character generator. Likewise, the extra characters which appear in the content of the external memory are stored in the form of digital font signals at selected addresses in the allotted area of the external memory. When the computer meets a character which is not contained in the internal memory, it identifies the character as an extra character, which is stored in the external memory itself. Then, the extra character is read out from the external memory to appear on the liquid crystal display. Thus, a part of the external memory is used as an annex to the internal memory when presentation of extra characters is required.

Pieces of information to be presented in electronic books can be renewed by: (1) putting new pieces of information directly in internal memory or RAM 18 or (2) changing external memories.

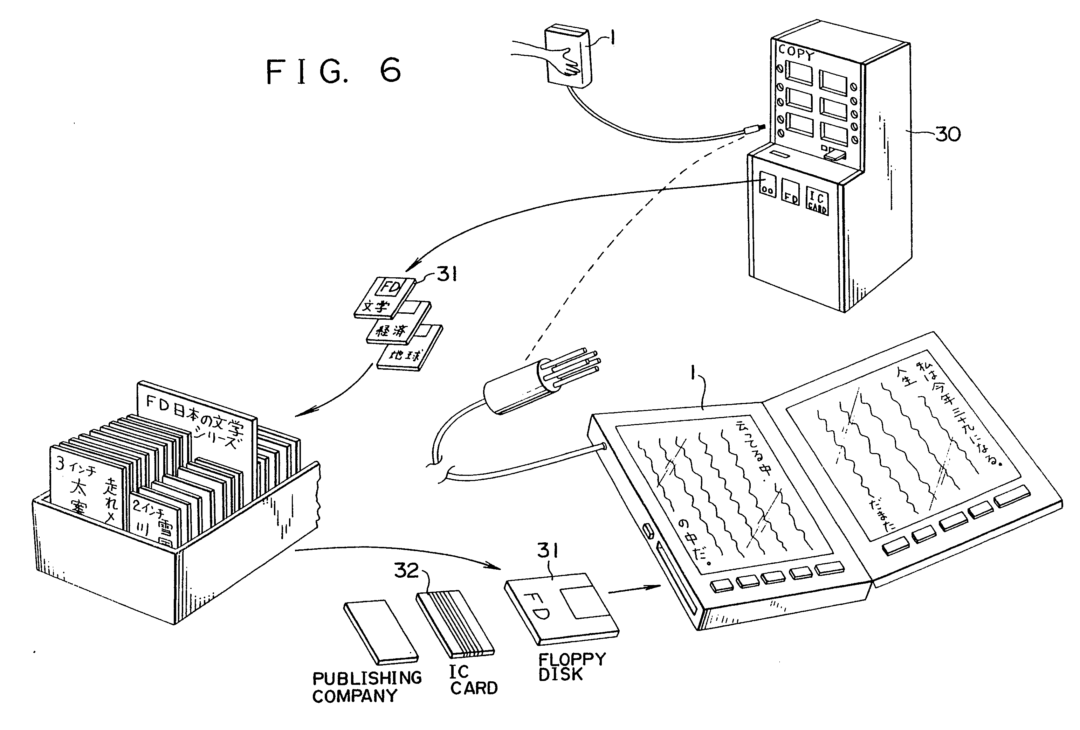

As shown in Fig.6, data can be transferred at an increased speed to an automatic, information vending machine 30 installed, for instance in a railway station by using exclusive telephone circuits. Data can be transferred at an increased speed into an electronic book simply by inserting a plug of the electronic book in the receptacle of the information vending machine 30. Electronic books of the type in which data can be transferred on the telephone require no mechanical parts to handle, for instance floppy disks, and accordingly the weight and cost of such electronic books can be reduced.

Also, such automatic vending machine 30 may sell new floppy disks 31 or IC cards every week, and people can buy daily or weekly floppy disks or IC cards. Used floppy disks 20 or IC cards can be recycled. (No memory media need be wasted, and therefore, there is no problem of disposing used media in contrast to printed matter such as old magazines.)

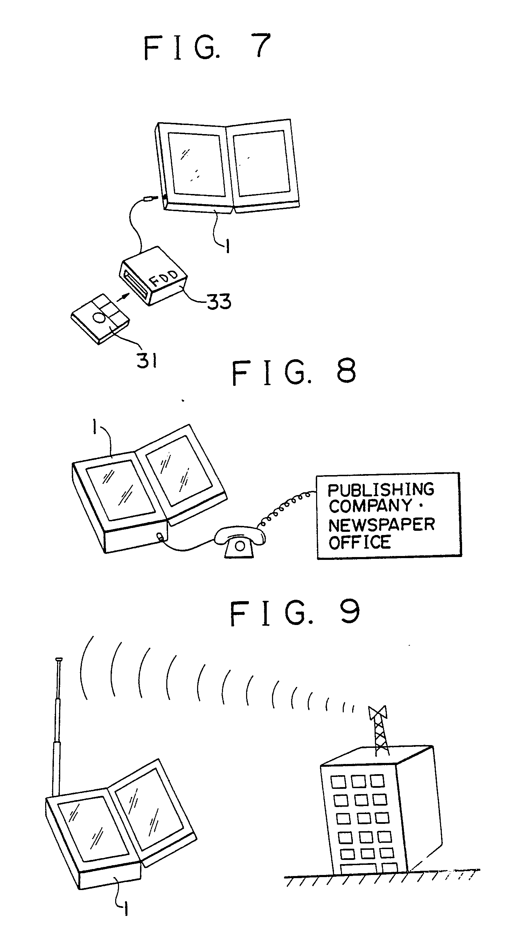

-As shown in Fig.7, data transfer unit 33 may be provided as being separate from electronic book 1. In use, floppy disk 31 is put in data transfer unit 33, which is connected to electronic book 1. The content of floppy disk 31 will be transferred to the internal memory of electronic book 1. This type of electronic book 1 is composed of display and associated components only, and accordingly it is light, can be carried like a book, and can be read anywhere.

A variety of information such as news, statistical data, novels, games etc. will be commercially available. After reading such information, it can be transferred from electronic books to personal computers. Only a desired piece of information (for instance, yesterday's baseball score of the "Giants") may be allowed to be selectively transferred from an information vending machine to an electronic book.

Other modes of information renewal are transfer and renewal of information via telephone and broadcast.

Transfer of information via telephone network:

Electronic books which are designed to obtain information via the telephone network have no floppy disk drive. Pieces of information may be transferred directly and stored in the internal memory of the electronic book via telephones and appropriate modems. Later, a reader can have an access to a desired piece of information for display.

Transfer of information on the air:

Electronic books may be designed to receive pieces of information which are carried by electromagnetic waves radiating from a broadcasting station, as shown in Fig.9. Specifically, such electronic books perform the function of demodulating and storing pieces of information (characters, drawings or photographs) from the received electromagnetic waves. A reader can have an access to each page of information thus stored for display. Pieces of information on the air may be classified according to the subject, and then the so classified pieces of information may be put in allotted positions for renewal in the internal memory of the electronic book. The electronic book may be left several hours in condition for selectively receiving broadcast information. Later, the so stored information can be displayed on the screen of the electronic book. This can be termed a "character broadcast receiving apparatus". An electronic book 1 amy perform a variety of functions according to the program contents stored in memory 19.

Underlining function:

A selected key is used to move a cursor between two selected start and end positions, thereby locating these start and end positions. Another selected key is used to underline the part of the page thus selected. The underline is stored in the external memory of the book for later display. Specifically, floppy disk drive control 27 functions to make floppy disk drive 26 move its recording head to a selected marginal position of the floppy disk, and then underline signals may be stored there in terms of pages, lines and characters between which characters the underline extends.

The marginal part of a floppy disk allotted to storage of underlines may have a capacity large enough to store 1,000 underlines, each requiring 4 bytes for start position and 4 bytes for end position. Thus, 8,000 bytes are required for recording 1,000 underlines. This amount, however, is only 1/125 of 1 megabyte floppy disk storage capacity, and therefore, the storage of underlines will not substantially reduce the recording space available for storage of information. Every type of electronic book can have this underlining function.

Contextual continuity function:

In case where a sentence runs from page to page, the part of the sentence remaining in the preceding page (or subsequent page) can be shifted to the subsequent page (or preceding page) now on display, thereby permitting presentation of the sentence in its complete form. Assume that "n"th page is now on display and that the "n + 1"th page is about to be displayed. The part of the sentence remaining in the "n"th page will be put ahead of the "n + 1"th page when it is displayed. Conversely, when returning to the "n-1"th page, the remaining part of the sentence in the "n"th page will be put to the end of the "n-1"th page.

Thanks to this function the reader can easily understand the context of a sentence continuing from page to page. Every type of electronic book may be equipped with this contextual continuity function.

Tentative storage amount controlling function:

A random access memory having a large storage capacity is almost inhibitively expensive, and therefore an internal memory economically permitted has a limited storage capacity.

Also, it is required that sequential presentation of information on the screen of the paperless book meet the speed at which an individual reader reads the book. The electronic book has a capability of determining the intervals at which the reader pushes the page-turning key, thereby determining the amount of information which must be transferred from an external memory such as a floppy disk to the internal memory of the electronic book at a time. Thus, the supply and presentation of information balances, and the reader can read sequential pages with the natural feeling that he would have when reading a book. This function is applied only to an electronic book using external memory as an information source.

Automatic page-turning function:

Pages can be presented on display one after another automatically without using the page-turning key. Once the automatic page-turning key has been pushed, pages will be turned over at regular intervals, which are determined by an associated timer. The timer can be set to shorten intervals for quick readers.

Every type of electronic book may be equipped with this function.

Presentation of extra characters:

The extra characters which appear in an external memory means such as a floppy disk, are stored in the marginal area of the floppy disk, thus permitting it to function as an annex to the internal memory having standard characters stored therein. Thanks to the use of marginal recording area of the floppy disk for storing extra characters an economically inhibitively large capacity memory is not required in the electronic book.

A character which is presented with 16x16 dots, requires 32 bytes, and a character which is presented with 24x24 dots, requires 72 bytes. Assume that 200 extra characters appear in the content of a floppy disk. In the former case 32x200 (= 6,400) bytes are required whereas in the latter case 72x200 (= 14,400) bytes are required. The amount of 6,400 bytes is only 0.64% of a 1 megabyte floppy disk's capacity whereas the amount of 14,400 bytes is only 1.44% of a 1 megabyte floppy disk's capacity. Therefore, no substantial reduction of information recording capacity is caused.

Also, it is possible to make the marginal area of the floppy disk responsive to the increasing number of the extra characters appearing in the memory medium for enlarging the marginal area until all· extra characters have been stored. This function is described as being applied to external memory such as a floppy disk, but it can be equally applied to internal memory of the electronic book.

Composition or making-up function:

External memory means has composition control codes among characters, thereby permitting characters on display to be arranged in the same composition as books, newspapers or magazines. Specifically composition control codes represent: capital/small letter selection; indention; heading; affixment; character modification; longitudinal/lateral arrangement; new paragraph; line/space change; extra character used; underlining; and inhibitions. A decoding table is stored in internal memory 19. Every time a composition control code is encountered, it will be referred to the decoding table, and the required composition control will be carried out according to the program which is stored in memory 19.

The standard decoding table may be stored in internal memory 19, whereas the specific decoding table which must be used prior to reference to the standard table, may be stored in external memory means such as floppy disks.

Information selecting-and-storing function:

In cases where renewal of information is effected by broadcast, information on the air can be selectively stored in memory means in an electronic book. This selective renewal of information can be effected in retrieving information from telephone, too. Selection may be effected in terms of codes, which are allotted to different kinds or subjects of information and to different areas of memory means in an electronic book. Among a lot of information on the air or over the telephone desired pieces of information may be selected in terms of the allotted code, and then the storage area in which the selected pieces of information are to be put, may be found in terms of the same code. Thus, the old pieces of information in the storage area will be replaced by the latest pieces of information of the same subject.

The social circumstances which favour electronic books are:

1) Recently, publishing has been effected by composing sentences with word processors and by forming or typesetting the so composed sentences with computerized typesetting systems. Necessary digital information is stored in magnetic recording tape. Therefore, required digital information can be readily transferred to magnetic means such as floppy disks.

2) There has been a social demand for saving forest resources on a global scale.

3) There is an ever increasing demand for saving spaces to store books, magazines or other printed matter.

Paperless books according to the present invention can meet these demands to some extent.

**Claims**

1. An electronic book comprising;
memory means to store, in the form of separate pages, pieces of information such as sentences each composed of characters;
means (26,27) to read said pieces of information;
means (2) to display each page of pieces of information thus read;
first key means (3) to indicate the display of a subsequent page;

second key means (3) to indicate the return to the preceding page;

third key means (3) to indicate the display of the contents of the stored information,

whereby access is permitted to desired page of information in said memory means to display pages one after another like turning the pages of a book.

2. An electronic book according to claim 1, further comprising:

fourth key means (3) to put a cursor on a selected position in the displayed page;

fifth key means (3) to locate the selected position; and

sixth key means (3) to underline the part of the page from the selected starting position to a desired ending position, the position of the underline thus drawn being stored in said memory.

3. An electronic book according to claim 1, further comprising:

timer means (12,13) to permit the automatic visual presentation of subsequent pages for a predetermined length of time without pushing said first key means.

4. An electronic book according to claim 1, wherein:

said memory means includes internal memory means (20) to store standard characters and external memory means having an area allotted to store extra characters appearing in the content of said external memory means, thereby permitting visual presentation of said extra characters as required without recourse to storage of all extra characters in said internal memory means.

5. An electronic book according to claim 1, further comprising:

means to receive and store in said memory means, pieces of information broadcast on air or transmitted on the telephone, said pieces of information being identified in terms of code numbers which indicate the kinds or subjects of said pieces of information, thereby permitting the addressing of said memory in terms of code numbers to renew stored information.

# F I G. I

# F I G. 2

# F I G. 3

# F I G. 4

# FIG. 5

F I G.  6

EP 0 390 611 A2

# FIG. 7

FDD

33

31

# FIG. 8

PUBLISHING
COMPANY·
NEWSPAPER
OFFICE

1

# FIG. 9

1